# EUROPEAN PATENT SPECIFICATION

(11) **EP 4 352 026 B1**
(45) Date of publication and mention of the grant of the patent: **13.08.2025**
(21) Application number: 22729833.8
(22) Date of filing: 07.06.2022
(51) Int. Cl.: C04B 28/04, C04B 18/20, C04B 111/60

(54) **DRY MIXTURE OF CEMENT PLASTIC SCREED**
TROCKENMISCHUNG EINES ZEMENT-KUNSTSTOFFESTRICHS
MÉLANGE SEC DE CHAPE EN PLASTIQUE DE CIMENT

(30) Priority: 07.06.2021 SK PP402021; 07.06.2021 SK PV822021 U
(43) Date of publication of application: 17.04.2024
(73) Proprietor: Terratico, J.S.A., 010 08 Zilina (SK)
(72) Inventor: NAGY, Ottó, 930 33 Horný Bar (SK); NAGY, Ottó, 930 33 Horný Bar (SK)
(74) Representative: Jeck, Jonathan
(86) International application number: PCT/SK2022/000005
(87) International publication number: WO 2022/260606

(56) References cited:
- CN-A- 112 551 967
- GB-A- 2 525 454
- US-A- 5 422 051
- US-B2- 10 669 201
- GUNEYISI E ET AL: "Properties of rubberized concretes containing silica fume", CEMENT AND CONCRETE RESEARCH, PERGAMON PRESS, ELMSFORD, NY, US, vol. 34, no. 12, 1 December 2004 (2004-12-01), pages 2309 - 2317, XP004661934, ISSN: 0008-8846, DOI: 10.1016/J.CEMCONRES.2004.04.005

## Description

### Field of technology

The invention relates to a dry mixture of cement plastic screed usable in construction. The invention falls into the field of construction.

### Prior art

At present, products based on cement, silica sand and stone, granite or marble crumb such as e.g. terazzo are commonly known in the field of construction and stonework. Terrazzo is a composite material, poured in place or precast, which is used for floor and wail treatments. It comprises chips of marble, quartz, granite, glass, or other suitable material, poured with a cementitious binder (for chemical binding), polymeric (for physical binding), or a combination of both.

The document RU 2739910 C1 is known in the prior art, which describes a polymercement dry construction mixture which contains Portland cement, a polymeric binder, sand, glass fiber and a modifier. The polymeric binder is redispersible polyvinyl acetate polymer powder or polyvinyl acetate copolymers.

Two-component fast-setting plastic cement is also known from the document CN 112063160 A, where the first component is a polyether polyol, a curing agent, a surface hydroxylated modified paraffin, a thickener and a solid filler. The second component is a polyether polyol, a catalyst, a crosslinking agent, paraffin modified by a surface hydroxyl group, a thickener and a solid. Paraffin with certain hydroxyl content is introduced into these two components.

GB 2525454 discloses a construction material, and in particular a construction material comprising waste plastic material. The construction material may be used in a range of applications to replace traditional concrete or cement. The construction material comprises cementitious material and particulate aggregate, the cementitious material being 20-30% by volume of the dry ingredients of the construction material and the particulate aggregate being 70-80% by volume of the dry ingredients of the construction material, and wherein the particulate aggregate comprises 25-100% by volume particles of a plastics material, and the aggregate comprises 10-75% by volume particles having a size of 0.1-2 mm and 25-90% by volume particles having a size of 2-10 mm.

Erhan Güneyisi et all "Cement and Concrete Research 34 (2004) 2309-2317 discloses properties of rubberized concretes containing silica fume.

There were also tendencies to mix acrylate rubber asphalt into the cement, as is the case with the utility model SK 1692 U, in order to reduce the bulk density, increase the thermal insulation properties and ensure water impermeability.

A building mix comprising cement and paper pulp is also known, as described in utility model SK 4239 U, which saves on production costs and reduces the weight of the product.

However, none of the above products are suitable for creating floor screeds.

The problem of cement mixtures, which has not yet been fully explored, has at present evoked to design such a composition of the cement mixture that would also allow the ecological use and consumption of plastic waste. The result of this effort is the dry mix of cement plastic screed described in the present invention.

### The essence of the invention

The above-mentioned problem of cement screed mixtures is solved by the proposed (dry) mixture of cement plastic screed according to the invention. The essence of the invention lies in the fact that, depending on the composition, it contains crushed plastics preferably which cannot be further recycled. It is possible to use plastics of all kinds preferably with a fraction of 1 mm to 20 mm, or even a higher fraction, or chopped plastic strips, except for plastic pellets. It Is also cement, e.g, Portland gray or white with a strength of 32,5 MPa to 52.5 MPa, silica sand with a fraction 0.2 mm to 0,8 mm, powdery superplasticizer 10/40, gravel with a fraction 0/4 and silica fume (microsilica) SiO₂.

Portland grey and Portland white represent historical names for a cement which may be used as a synonym for hydraulic binder.

According to the present invention the superplasticizer may be based on or may comprise or may be made from melamine formaldehyde and/or may fulfill the EN 934-2 2019+A1:2012 standard.

This dry mixture of cement plastic screed can be packaged e.g. into paper bags and at the point of use it is only mixed with water.

The essence of the invention is supplemented by the percentage representation of individual components of the dry mixture of cement plastic screed. The dry mixture of cement plastic screed comprises:
- 18% of weight to 24% of weight of plastic crumb
- 20% of weight to 26% of weight of Portland cement 32.5 CEM I
- 20% of weight to 26% of weight of silica sand with a fraction 0.2 to 0.8 mm
- 2.7% of weight to 3.1 % of weight of superplasticizer Melment 10/40
- 2.0% of weight to 2.7% of weight of silica fume (microsilica) SiO₂
- Gravel with a fraction 0/4 in additional quantity making up for the rest.

All above components adding up to 100%.

The advantages of the (dry) mixture of cement plastic screed according to the invention are evident from its external effects. The effects and originality lie in its unique composition, where the goal is to save costs by using cheap input raw material - plastic
waste as well as reducing the weight of the resulting product. The undeniable benefit is the fact that the screeds made of this cement plastic mixture look like terrazzo.

Terrazzo is a composite material, poured in place or precast, which is used for floor and wall treatments. It comprises chips of marble, quartz, granite, glass, or other suitable material, poured with a cementitious binder (for chemical binding), polymeric (for physical binding), or a combination of both.

This effect is achieved by replacing marble crumb with plastic waste crumb, which reduces costs by up to 80%. Screeds made of cement plastic mixture according to the invention leave a lower carbon footprint and at the same time solve the problem of one of the most difficult to recycle plastic waste. Even decades old degraded plastic, even if exposed to sunlight, can be processed in this way. The addition of plastic crumb gives the screed its surface structure, mosaic and the addition of silica sand adds stiffness to the screed.

### Example of an embodiment of the invention

It is understood that the individual embodiments of the (dry) mixture of cement plastic screed according to the invention are presented for illustration and not as limitations of solutions. Those skilled in the art will find, or be able to ascertain using no more than routine experimentation, many equivalents to specific embodiments of the dry mixture of cement plastic screed according to the invention. Such equivalents will also fall within the scope of the claims.

It is not a problem for those skilled in the art to optimally mix the individual components of the dry mixture of cement plastic screed, so these features have not been addressed in detail.

### Example

In this example of a specific embodiment of the invention, the (dry) mixture of cement plastic screed is described. The dry mixture of cement plastic screed comprises or consists of:
22.5 kg of plastic crumb, which is 21.844% of weight,
25.0 kg of Portland cement 32.5 CEM I which is 24.27% of weight,
25.0 kg of silica sand with a fraction 0.6 mm, which is 24.27% of weight,
3.0 kg of superplasticizer Melment 10/40, which is 2.91% of weight,
2.5 kg of silica fume (microsilica) SiO₂, which is 2.43% of weight,
25.0 kg of gravel with a fraction 0/4, which is 24.276% of weight

### Industrial applicability

The dry mixture of cement plastic screed according to the present invention is intended for the field of construction.

## Claims

1. Dry mixture of cement plastic screed, **characterized in that** it contains:
- 18% of weight to 24% of weight of plastic crumb,
- 20% of weight to 26% of weight of Portland cement,
- 20% of weight to 26% of weight of silica sand with a fraction 0.2 to 0.8 mm,
- 2.7% of weight to 3.1% of weight of superplasticizer,
- 2.0% of weight to 2.7% of weight of silica fume (microsilica) SiO₂,
- Gravel with a fraction 0/4 making up for the rest,
wherein all above components together add up to 100% for the dry mixture.

2. Dry mixture of cement plastic screed according to Claim 1, **characterized in that** it contains Portland cement 32.5 CEM I.

3. Dry mixture of cement plastic screed according to Claim 1, **characterized in that** it contains powdery superplasticizer, such as Melment 10/40.

## Patentansprüche

1. Trockenmischung für zementgebundenen Kunststoffestrich, **dadurch gekennzeichnet, dass** sie enthält:
- 18 Gew.-% bis 24 Gew.-% Kunststoffgranulat,
- 20 Gew.-% bis 26 Gew.-% Portlandzement,
- 20 Gew.-% bis 26 Gew.-% Quarzsand mit einer Körnung von 0,2 bis 0,8 mm,
- 2,7 Gew.-% bis 3,1 Gew.-% Fließmittel,
- 2,0 Gew.-% bis 2,7 Gew.-% Silikastaub (Mikrosilika) SiO₂,
- Kies mit einer Körnung 0/4, der den Rest ausmacht,
wobei alle oben genannten Komponenten zusammen 100% der Trockenmischung ergeben.

2. Trockenmischung für zementgebundenen Kunststoffestrich nach Anspruch 1, **dadurch gekennzeichnet, dass** sie Portlandzement 32,5 CEM I enthält.

3. Trockenmischung für zementgebundenen Kunststoffestrich nach Anspruch 1, **dadurch gekennzeichnet, dass** sie pulverförmiges Fließmittel enthält, wie zum Beispiel Melment 10/40.

## Revendications

1. Mélange sec pour chape en plastique liée au ciment, **caractérisé en ce qu'il** contient :
- 18 % en poids à 24 % en poids de granulés de plastique,
- 20 % en poids à 26 % en poids de ciment Portland,
- 20 % en poids à 26 % en poids de sable de quartz avec une granulométrie de 0,2 à 0,8 mm,
- 2,7 % en poids à 3,1 % en poids de superplastifiant,
- 2,0 % en poids à 2,7 % en poids de fumée de silice (microsilice) SiO₂,
- du gravier avec une granulométrie 0/4, qui constitue le reste,
où tous les composants mentionnés ci-dessus totalisent ensemble 100 % du mélange sec.

2. Mélange sec pour chape en plastique liée au ciment selon la revendication 1, **caractérisé en ce qu'il** contient du ciment Portland 32,5 CEM I.

3. Mélange sec pour chape en plastique liée au ciment selon la revendication 1, **caractérisé en ce qu'il** contient un superplastifiant en poudre, tel que le Melment 10/40.
